# NEW EUROPEAN PATENT SPECIFICATION

(11) **EP 0 355 107 B2**
(45) Date of publication and mention of the opposition decision: **17.09.1997**
(45) Mention of the grant of the patent: 26.01.1994
(21) Application number: 88903617.4
(22) Date of filing: 24.03.1988
(51) Int. Cl.: B23P 11/02, B23P 21/00

(54) **METHOD AND AUTOMATIC WEIGHT APPLICATION MACHINE**
VERFAHREN UND MASCHINE ZUR AUTOMATISCHEN ANBRINGUNG VON AUSWUCHTGERICHTEN
PROCEDE ET MACHINE AUTOMATIQUE D'APPLICATION DE POIDS

(30) Priority: 16.04.1987 US 39586
(43) Date of publication of application: 28.02.1990
(73) Proprietor: RANSBURG CORPORATION, Indianapolis, IN 46208 (US)
(72) Inventor: MILLER, William, H., Indianapolis, IN 46220 (US)
(74) Representative: Allen, William Guy Fairfax
(86) International application number: US8800936
(87) International publication number: WO8807909

(56) References cited:
- DE-A- 941 956
- GB-A- 914 753
- US-A- 2 122 065
- US-A- 2 769 642
- US-A- 2 980 992
- US-A- 3 623 208
- US-A- 3 633 263
- US-A- 3 748 910
- US-A- 4 554 734
- PROSPECT: HOFFMANN REPORT 56/D
- PROSPECT: HOFFMANN REPORT 32
- PROSPECT: HOFFMANN REPORT 64
- PROSPECT: HOFFMANN REPORT 71

## Description

This invention relates to automatic weight application machines for applying correcting weights to rotary elements once the amounts and locations of weight required to correct imbalance existing in such rotary elements are determined. The invention is disclosed in the context of a machine for automatically applying balance correcting weights to vehicle wheel-and-tire assemblies. However it is believed that the invention is useful in other applications in which balance correcting weights are to be applied to other types of rotary elements as well.

American style single component balance correcting weights include selected different mass value portions, typically of lead, with a molded-in-place, spring steel clip to retain the lead mass on the wheel rim flange. Customarily, these balance-correcting weights have been manually selected, positioned on the flange at the point where correction is to be applied, and installed by driving the clip portion onto the flange with a hammer.

Techniques and apparatus for applying balance correcting weights to vehicle wheel-and-tire assemblies are known. For example, US-A-3,623,208 describes a machine which utilizes the European-style two-part weight-and-clip correction scheme. In this machine, the tire is temporarily pressed away from the wheel flange. The retaining clip is slipped into place over a dummy weight form. The tire is then released. The dummy weight form is removed and the clip is held in place, sandwiched between the wheel flange and the tire. The proper correction weight is then inserted under the clip to complete the balance correction process. The mechanism of US-A-3,623,208 only achieves the installation of the retaining clip. The actual correcting weight is manually inserted later.

In US-A-4,554,734 a means for handling the European-style weights is described along with a simplified installation technique in which the temporary use of the dummy weight form is not necessary. The actual balance-correcting weight is placed on the wheel and the retaining clip is then pushed onto the wheel rim flange by another mechanism, avoiding the need to press the tire away from the wheel flange. The mechanism of US-A-4,554,734 achieves the complete installation of the European two-piece correction weights but would not accommodate the American-style weights due to their changing and irregular shapes.

In German Patent Specification DE-C-941,956, a mechanism is described to install an American-style one piece correction weight with a molded-in retaining clip. This mechanism retains the weight in a pressure pad with a spring and pushes the assembly onto the wheel flange using a C-clamp arrangement manually actuated through a mechanical linkage. The mechanism of German Patent Specification DE-C-941,956 employs a form-fitting pressure pad and spring retainer to install the American-style one-piece weight-and-clip-assembly manually, but makes no provision for handling the weight and would be difficult to automate.

GB-A-914753 defining the closest prior art discloses an apparatus for automatically applying a balance correcting weight -and-clip assembly to a vehicle wheel-and-tire assembly, the weight -and-clip assembly including a ferromagnetic clip for mounting the weight on a flange of the vehicle wheel-and-tire assembly, the apparatus comprising means for orienting the weight -and-clip assembly for application by placing a magnet on the weight -and-clip assembly in close proximity to the clip, means for conveying the magnet into close proximity to the vehicle wheel-and-tire assembly, means for relatively orienting the vehicle wheel-and-tire assembly and magnet so that the weight -and-clip assembly carried by the magnet is properly oriented to be applied to the vehicle wheel-and-tire assembly to correct imbalance existing in the vehicle wheel-and-tire assembly, and means to urge the weight -and-clip- assembly onto the wheel-and-tire assembly, wherein said means to urge comprise means for rapidly reciprocating the magnet itself relative to the flange of the vehicle wheel-and-tire assembly to which the weight -and-clip assembly is to be applied to hammer the clip onto the flange.

The present invention is characterised in that the magnet comprises an electromagnet including an electromagnetic coil and a ferromagnetic portion, and the apparatus further comprises means for orienting the electromagnet with the ferromagnetic portion of the electromagnet adjacent the weight -and-clip assembly to be applied, means for passing an electrical current through the electromagnetic coil to attract the ferromagnetic clip of the weight -and-clip assembly into close proximity to the ferromagnetic portion of the electromagnet and means for interrupting the current through the electromagnetic coil.

It has been found that using such an apparatus according to the present invention it is readily possible accurately to pick up the weight -and-clip assembly so that it is correctly oriented, the weight -and-clip assembly being removed from a bin of such assemblies. Having located the weight -and-clip assembly on the electromagnet, the current is turned on and the assembly is picked up and is retained in this correct orientation until it is correctly positioned on the wheel rim of the vehicle wheel-and-tire assembly whereafter the current of the electromagnet can be cut of. This enables the weight -and-clip assembly then to be driven onto the rim at the correct location but the magnet does not disturb the positioning either during this hammering on or during removal of the magnet subsequently.

The invention also provides a method for automatically applying a balance-correcting weight -and-clip assembly to a vehicle wheel-and-tire assembly, the weight -and-clip assembly including a ferromagnetic clip for mounting the weight on a flange of the vehicle wheel-and-tire assembly, the method comprising orienting the weight -and-clip assembly for application by placing a magnet on the weight -and-clip assembly in close proximity to the clip, conveying the magnet into close proximity to the vehicle wheel-and-tire assembly and magnet so that the weight -and-clip assembly carried by the magnet is properly oriented to be applied to the vehicle wheel-and-tire assembly to correct imbalance existing in the vehicle wheel-and-tire assembly, and urging the weight -and-clip assembly into engagement with the wheel-and-tire assembly, the weight -and-clip assembly being urged by rapidly reciprocating the magnet relative to the flange of the vehicle wheel-and-tire assembly to which the weight -and-clip assembly is to be applied to hammer the clip onto the flange, characterised in that the step of placing a megnet on the weight -and-clip assembly in close proximity to the clip comprises placing an electromagnet including an electromagnet coil and a ferromagnetic portion on the weight -and-clip assembly in proximity to the clip, orienting the electromagnet with the feromagnetic portion of the electromagnet adjacent the weight -and-clip assembly to be applied, and passing an electrical current through the electromagnetic coil to attract the ferromagnetic clip of the weight -and-clip assembly into close proximity to the ferromagnetic portion of the electromagnet and the method further comprises interrupting the current through the electromagnetic coil.

The invention may best be understood by referring to the following description and accompanying drawing which illustrate the invention. In the drawings:
Fig. 1a illustrates an entry-side elevational view of a station to which wheel-and-tire assemblies requiring the addition of balance correcting weights are conveyed, where balance correcting weights are automatically applied to the upwardly facing rim flanges of the wheel-and-tire assemblies, and away from which the wheel-and-tire assemblies are conveyed after the application of balance correcting weights;
Fig. 1b illustrates an entry-side elevational view of a station to which wheel-and-tire assemblies requiring the addition of balance correcting weights are conveyed, where balance correcting weights are automatically applied to the downwardly facing rim flanges of the wheel-and-tire assemblies, and away from which the wheel-and-tire assemblies are conveyed after the application of the balance correcting weights;
Fig. 2 illustrates a fragmentary side elevational view of certain details of the station illustrated in Figs. 1a-b;
Fig. 3 illustrates a perspective view of certain of the details illustrated in Fig. 2;
Fig. 4 illustrates a fragmentary side elevational view of certain details of the stations illustrated in Figs. 1a-b;
Fig. 5 illustrates an exploded perspective view of the details illustrated in Fig. 4; and
Fig. 6 illustrates a fragmentary side elevational view of certain details of the stations illustrated in Figs. 1a-b.

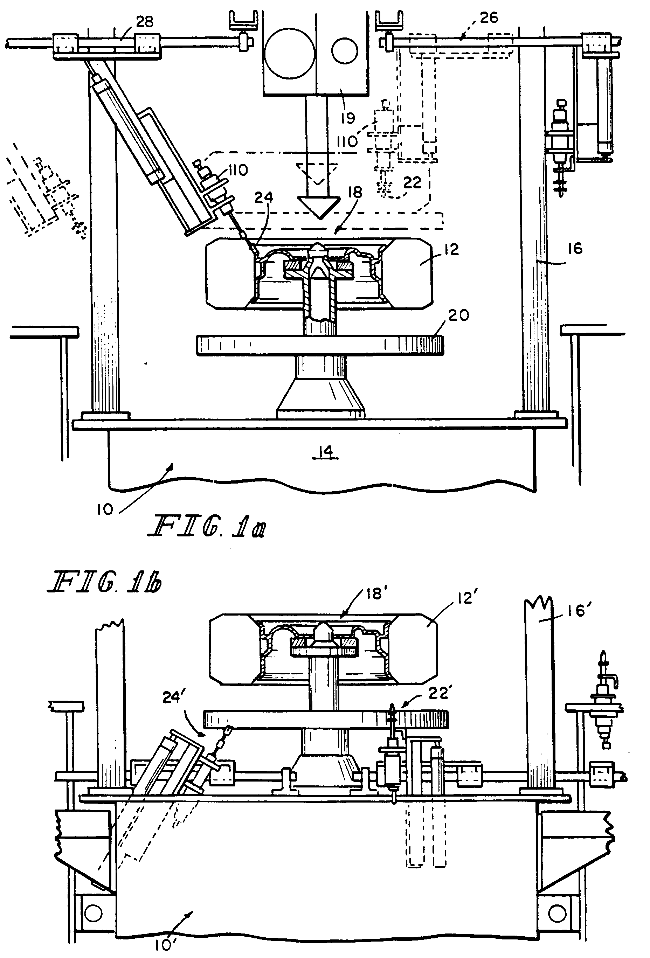

Turning to Fig. 1a, an automatic weight application station 10 for applying balance correcting weights to wheel-and-tire assemblies 12 is viewed from its entry end 14. Station 10 includes a framework 16 for supporting the station's operating mechanisms which include a chuck 18 and a conveyor/elevator mechanism 20, both of known construction, and two automatic weight application hammers 22, 24. Hammer 22 is mounted above and to one side of chuck 18. Hammer 24 is mounted above and to the other side of chuck 18. Hammers 22, 24 are mounted on carriages 26, 28, respectively, for movement between non-use orientations, illustrated by the solid-line position of hammer 22 and the broken-line position of hammer 24, and use orientations, illustrated by the broken-line position of hammer 22 and the solid-line position of hammer 24. Carriages 26, 28 include means such as, for example, rodless pneumatic cylinders, to reciprocate hammers 22, 24 between their use and non-use orientations under the control of, for example, a programmable controller.

The non-use orientations of hammers 22, 24 permit wheel-and-tire assemblies 12 requiring balance correction to be conveyed on a conveyor section 20 into the station 10. Conveyor section 20 is then lowered, depositing the wheel-and-tire assemblies requiring correction onto chuck 18. Since the amount(s) and location(s) of correctable imbalance(s) in the wheel-and-tire assemblies 12 have already been determined and the orientations of the wheel-and-tire assemblies are known, the chuck mechanism 18 can be driven rotatably to orient the location(s) of imbalance of the wheel-and-tire assemblies beneath the use (broken-line) orientation of hammer 22 or below the use (solid-line) orientation of hammer 24, depending upon whether the wheel of the particular wheel-and-tire assembly, the imbalance of which is being corrected, is steel or aluminum. If the wheel is steel, hammer 22 is used. If the wheel is aluminum, hammer 24 is used. Once the balance correcting weight has been applied, carriages 26, 28 return to their non-use orientations, chuck mechanism 18 releases the wheel-and-tire assembly, the conveyor/elevator section 20 elevates the wheel and tire assembly off the chuck mechanism 18, raising the assembly 12 back to the broken line orientation illustrated in Fig. 1a, and the wheel-and-tire assembly is conveyed out of station 10 for further processing via an overhead transfer mechanism 19.

It is to be understood that the balance correction system here described is a two plane system, and that a companion station 10' illustrated in Fig. 1b is located immediately upstream or downstream from station 10. This companion station has a hammer 24' in the oblique orientation of hammer 24 but below a chuck 18', for application of balance correction weights to the lower flanges of horizontally oriented aluminum wheels. By the same token, this companion station 10' has a hammer 22' in the vertical orientation of hammer 22 but below chuck 18', for application of balance correcting weights to the lower flanges of horizontally oriented steel wheels. The vertically oriented hammers 22, 22' are used in the application of balance correcting weights to steel wheels. The obliquely oriented hammers 24, 24' are used in the application of balance correcting weights to aluminum wheels.

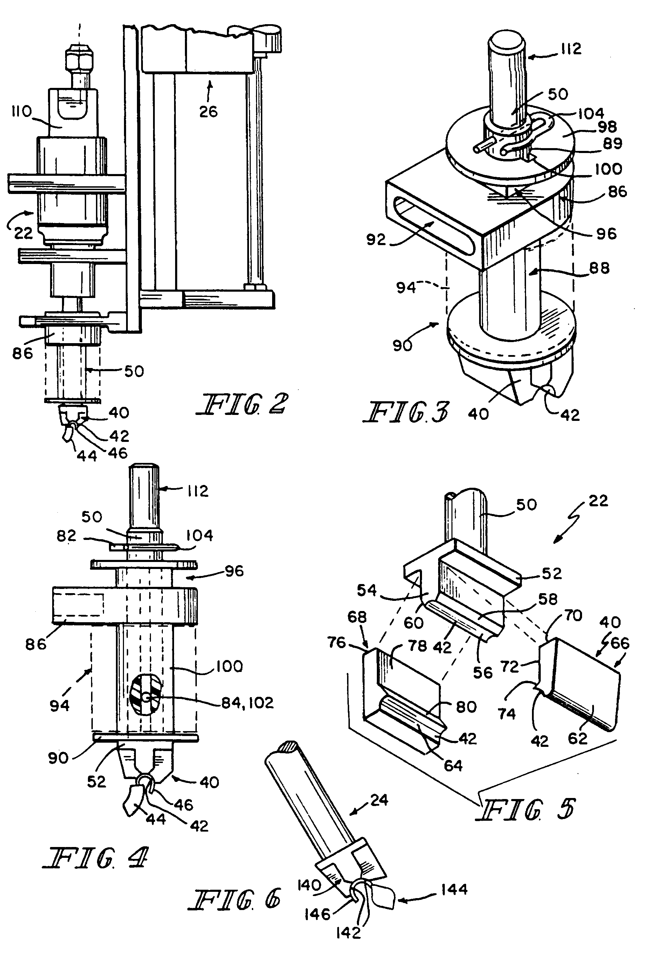

Closer consideration of the construction of hammers 22, 22' is permitted with reference to Figs. 2-5. Hammer 22 is illustrative. It includes a jaw portion 40 having a contour 42 conforming, at least in part, to the transverse sectional shape of a portion of a combination balance correcting weight 44 and clip 46 for correcting imbalance in a steel wheel. Clip 46 is constructed from a ferromagnetic material, such as spring steel. Weight 44 typically is lead or a lead alloy molded onto clip 46. Hammer 22 also includes a shank portion 50 joined to jaw portion 40 at a somewhat rectangular pad 52 integrally formed with shank 50, Figs. 4-5. A center section 54 of jaw portion 40 is also integrally formed with shank 50. Center section 54 extends generally transversely to the longitudinal extent of shank 50 and also transversely to the radii of wheel and tire assemblies onto which hammer 22 hammers balance correcting weights. The surface 56 of center section 54 remote from pad 52 provides a portion of the contour 42. Bevelled surfaces 58, 60 of center section 54 are provided adjacent surface 56. Shank portion 50, pad 52 and center section 54 are machined from a ferromagnetic material such as mild steel.

Side surfaces 62, 64 (Fig. 5) of jaw 40 are provided by inserts 66, 68, respectively. Side surfaces 62, 64 provide part of the contour 42. Inserts 66, 68 are also provided with surfaces 70, 72, 74 and 76, 78, 80 which abut pad 52 and center section 54. Inserts 66, 68 are constructed from non-magnetic material. Illustratively, inserts 66, 68 are constructed from stainless steel and are attached to pad 52 and center section 54 by brazing.

Shank 50 is provided near its upper end with a through passageway 82. Another opening 84 is provided in shank 50 between passageway 82 and pad 52.

Hammer 22 also includes a bobbin 86 which illustratively is molded from nylon. Bobbin 86 includes a column 88 providing a central passageway 89 which slidably receives shank 50, an endplate 90, a socket 92 for receiving an electrical connector (not shown) by which electrical contact can be made from a current source (not shown) in station 10 to a coil 94 (illustrated in broken lines) of several turns of insulated wire wound on bobbin 86, a square cross-section portion 96, and an endplate 98. Square cross-section portion 96 is received in a square slot on carriage 26 to prevent bobbin 86 from turning relative to carriage 26. Central passageway 89 includes a longitudinally extending, generally rectangular cross-section slideway 100 (Fig. 3) which receives a locator pin 102 with which opening 84 is fitted. The engagement of locator pin 102 in slideway 100 prevents rotation of shank 50 in passageway 89. Endplate 90 cooperates with pad 52 to retain shank 50 in bobbin 86 in one direction. A key 104 insertable through passageway 82 cooperates with endplate 98 to retain shank 50 in bobbin 86 in the other direction.

An air hammer 110 (Fig. 1) is associated with carriage 26. Air hammer 110 receives the end 112 (Figs. 4-5) of shank 50 remote from jaw 40. Actuation of air hammer 110 drives the hammer 22 through cycles of operation to drive a weight 44 and clip 46 assembly onto the flange of a steel wheel rim. Air hammer 110 illustratively is an Ingersoll-Rand Model AVC13-C1 suitably valved to operate hammer 22 under the control of a process controller.

Referring to Fig. 6, hammers 24, 24' are similarly configured to hammers 22, 22' except that the contour 142 of hammers 24, 24' conforms, at least in part, to the transverse sectional shape of a portion of a combination balance correcting weight 144 and clip 146 for correcting imbalance in an aluminum wheel.

In operation, a means (not shown) for delivering a balance correcting weight in the proper orientation to be engaged by hammer 22 or 24 conveys the appropriate weight to the hammer while the hammer is in its non-use orientation. Such a delivery means can comprise multiple vibratory feeders with a programmable controller operated gate for selecting which feeder is to supply balance correcting weight to correct imbalance in a particular wheel and tire assembly 12. For example, if five different weights, illustratively, .5 oz., 1.0 oz., 1.5 oz., 2.0 oz. and 2.5 oz. (14 g., 28 g., 42.5 g.., 56.7 g. and 70.9 g., respectively) are available to correct imbalance in vehicle wheel and tire assemblies passing along conveyor 20, five vibratory feeders feed weights for correcting imbalances in steel wheels to the non-use position of hammer 22. Five vibratory feeders feed weights for correcting imbalances in aluminum wheels to the non-use position of hammer 24. The feeders feed weights in the proper orientations to their respective jaws 40, 140.

As the appropriate weight to correct an imbalance in a plane of a particular steel or aluminum wheel and tire assembly 12 is presented at the appropriate jaw 40, 140, the coil 94 associated with that jaw 40, 140 is energized to capture the appropriate weight 44, 144 and clip 46, 146 assembly in the jaw 40, 140. Concurrently, the conveyor section is lowered to lower the wheel and tire assembly 12, the imbalance of which is to be corrected, onto the chuck 18. The chuck 18 orients the unbalanced wheel-and-tire assembly with the location at which weight is to be applied under the use position of hammer 22 (for steel wheels) or hammer 24 (for aluminum wheels). The hammer 22 or 24 is then advanced until the weight-and-clip assembly comes to rest in contact with the wheel flange at the location at which the correcting weight-and-clip assembly is to be applied. The pneumatic hammer 110 associated with the appropriate hammer 22, 24 is then driven to execute a number of operating cycles to hammer the appropriate weight onto the wheel-and-tire assembly at the appropriate location. The coil 94 is then deenergized to release the weight-and-clip assembly. The carriage 26, 28 is then retracted to its non-use orientation. The conveyor is elevated, and the wheel-and-tire assembly, with balance-correcting weight attached, proceeds to further processing.

## Claims

1. Apparatus for automatically applying a balance correcting weight (44) -and-clip (46) assembly to a vehicle wheel-and-tire assembly (12), the weight (44) -and-clip (46) assembly including a ferromagnetic clip (46) for mounting the weight (44) on a flange of the vehicle wheel-and-tire assembly (12), the apparatus comprising means (20) for orienting the weight (44) -and-clip (46) assembly for application by placing a magnet (54,94) on the weight (44) -and-clip (46) assembly in close proximity to the clip (46), means (26,28) for conveying the magnet (54,94) into close proximity to the vehicle wheel-and-tire assembly (12), means (20) for relatively orienting the vehicle wheel-and-tire assembly (12) and magnet (54,94) so that the weight (44) -and-clip (46) assembly carried by the magnet (54,94) is properly oriented (42) to be applied to the vehicle wheel-and-tire assembly (12) to correct imbalance existing in the vehicle wheel-and-tire assembly (12), and means (110) to urge the weight (44) -and-clip- (46) assembly onto the wheel-and-tire assembly (12), wherein said means (110) to urge comprise means for rapidly reciprocating the magnet (54,94) itself relative to the flange of the vehicle wheel-and-tire assembly (12) to which the weight (44) -and-clip (46) assembly is to be applied to hammer the clip (46) onto the flange, characterised in that the magnet (54) comprises an electromagnet (54,94) including an electromagnetic coil (94) and a ferromagnetic portion (54), and the apparatus further comprises means for orienting the electromagnet (54,94) with the ferromagnetic portion (54) of the electromagnet (54,94) adjacent the weight (44) -and-clip (46) assembly to be applied, means for passing an electrical current through the electromagnetic coil (94) to attract the ferromagnetic clip (46) of the weight (44) -and-clip (46) assembly into close proximity to the ferromagnetic portion (54) of the electromagnet (54,94) and means for interrupting the current through the electromagnetic coil (94).

2. The apparatus according to claim 1, characterised in that the means for relatively orienting the vehicle wheel-and-tire assembly (12) and magnet (54,94) so that the weight (44) -and-clip (46) assembly carried by the magnet (54,94) is properly oriented to be applied to the flange of the vehicle wheel-and-tire assembly (12) to correct imbalance existing in the flange of the vehicle wheel-and-tire assembly (12) comprises means (20) for rotating the location on the flange of the vehicle wheel-and-tire assembly (12) to which balance correcting weight (44) is to be applied into known orientation, and means (26,28) for bringing the magnet (54,94) into closely spaced relation adjacent the flange of the vehicle wheel-and-tire assembly (12) to which balance correcting weight (44) is to be applied.

3. Apparatus according to claim 1 or 2, characterised in that said magnet (54,94) forms part of a hammer (22,24) said hammer assembly including a jaw (40) with a contour (42) conforming to the shape of the clip (46) and a shank portion (50), the shank portion (50) and jaw (40) comprising ferromagnetic material, an electrically conductive coil (94) surrounding the shank portion (50) of the hammer (22,24), and means (110) for driving the hammer through operating cycles to hammer the wheel-and-clip assembly onto the wheel.

4. Apparatus according to claim 3 further comprising means (84,86,88,89,100,102) for movably mounting the hammer (22,24) relative to the coil (94) to permit driving of the hammer (22,24) through operating cycles without requiring corresponding movement of the coil (94).

5. Apparatus according to claim 4, characterised in that the means (84,86,88,89,100,102) for movably mounting the hammer (22,24) relative to the coil (94) includes means (86,89) providing a passageway (89) through the coil (94), the shank (50) of the hammer (22,24) sized for sliding insertion into the passageway (89), means (52,90,98,104) for retaining the shank (50) in the passageway (89), and means (96) for mounting the coil (94) on the machine.

6. Apparatus according to claim 3, 4 or 4, characterised in that the jaw (40) of the hammer (22,24) includes a portion (54) constructed from ferromagnetic material to contact the ferromagnetic clip (46) to manipulate the weight (44) -and-clip (46) assembly when current is passed through the coil (94) and a portion (66,68) constructed from a non-magnetic, relatively harder material than the ferromagnetic material to provide a surface (62,64) for hammering the weight (44) onto the wheel.

7. Apparatus according to claim 6, characterised in that the portion (54) of the hammer (50) which is constructed from ferromagnetic material is constructed from mild steel and the non-magnetic, relatively harder material (66,68) comprises stainless steel.

8. Apparatus according to claim 6, characterised in that the portion (54) of the jaw (40) which is constructed from ferromagnetic material comprises a central spine (54) which extends generally transversely to the shank portion (50) and generally transversely to the radius of a wheel-and-tire assembly (12) at the point at which the balance correcting weight (44) is to be applied, and the portion (66,68) of the jaw which is constructed of a non-magnetic, relatively harder material comprises first (66) and second (68) hammering surface-providing portions, one (66) of the hammering surface-providing portions located on one side of the spine (54) and the other (68) of the hammering surface-providing portions located on the other side of the spine (54).

9. Apparatus according to claim 8, characterised in that the spine (54) is constructed from mild steel and the hammering surface-providing portions (66,68) are constructed from stainless steel.

10. A machine for automatically applying a balance correcting weight (44) -and-clip (46) assembly to a vehicle wheel-and-tire assembly (12), the weight (44) -and-clip (46) assembly including a ferromagnetic clip (46) to which a balance-correcting weight (44) is attached, the machine including a conveyor (20) portion for conveying the wheel-and-tire assembly (12) to which the balance-correcting weight (44) is to be applied to a weight application station, orienting the wheel-and-tire assembly (12) properly to receive at the correct location the balance-correcting weight (44), and conveying the wheel-and-tire assembly (12) to which the balance-correcting weight (44) has been applied away from the weight application station, the machine further including apparatus according to any preceding claim, in which said apparatus has a storage orientation out of operating position permitting conveying of the wheel-and-tire assembly (12) to and from the weight application station and a use orientation in operating position adjacent the wheel-and-tire assembly (12) to which balance correcting weight (44) is to be applied, and means (26,28) for moving the apparatus selectively between its storage and use orientations to permit conveying of the wheel-and-tire assembly (12) to the weight application station, application of the balance-correcting weight (44) to the wheel-and-tire assembly (12), and conveying of the wheel-and-tire assembly (12) to which a balance correcting weight (44) has been attached away from the weight application station.

11. A method for automatically applying a balance-correcting weight (44) -and-clip (46) assembly to a vehicle wheel-and-tire assembly (12), the weight (44) -and-clip (46) assembly including a ferromagnetic clip (46) for mounting the weight (44) on a flange of the vehicle wheel-and-tire assembly (12), the method comprising orienting the weight (44) -and-clip (46) assembly for application by placing a magnet (54,94) on the weight (44) -and-clip (46) assembly in close proximity to the clip (46), conveying the magnet (54,94) into close proximity to the vehicle wheel-and-tire assembly (12) and magnet (54,94) so that the weight (44) -and-clip (46) assembly carried by the magnet (54,94) is properly oriented to be applied to the vehicle wheel-and-tire assembly (12) to correct imbalance existing in the vehicle wheel-and-tire assembly (12), and urging the weight (44) -and-clip (46) assembly into engagement with the wheel-and-tire assembly (12), the weight (44) -and-clip (46) assembly being urged by rapidly reciprocating the magnet (54,94) relative to the flange of the vehicle wheel-and-tire assembly (12) to which the weight (44) -and-clip (46) assembly is to be applied to hammer the clip (46) onto the flange, characterised in that the step of placing a megnet (54,94) on the weight (44) -and-clip (46) assembly in close proximity to the clip (46) comprises placing an electromagnet (54,94) including an electromagnet coil (94) and a ferromagnetic portion (54) on the weight (44) -and-clip (46) assembly in proximity to the clip (46), orienting the electromagnet (54,94) with the feromagnetic portion (54) of the electromagnet (54,94) adjacent the weight (44) -and-clip (46) assembly to be applied, and passing an electrical current through the electromagnetic coil (94) to attract the ferromagnetic clip (46) of the weight (44) -and-clip (46) assembly into close proximity to the ferromagnetic portion (54) of the electromagnet (54,94) and the method further comprises interrupting the current through the electromagnetic coil (94).

12. A method according to claim 11, characterised in that the step of relatively orienting the vehicle wheel-and-tire assembly (12) and magnet (54,94) so that the weight (44) -and-clip (46) assembly carried by the magnet (54,94) is properly oriented to be applied to the flange of the vehicle wheel-and-tire assembly (12) to correct imbalance existing in the flange of the vehicle wheel-and-tire assembly (12) comprises rotating the location on the flange of the vehicle wheel-and-tire assembly (12) to which balance correcting weight (44) is to be applied into known orientation, and bringing the magnet (54,94) into closely spaced relation adjacent the flange of the vehicle wheel-and-tire assembly (12) to which balance correcting weight (44) is to be applied.

13. A method according to any one of claims 11 or 12 and further including conveying the wheel-and-tire assembly (12) to which the balance-correcting weight (44) is to be applied to a weight application station, orienting the wheel-and-tire assembly (12) properly to receive at the correct location the balance-correcting weight (44), moving (26,28) a hammer assembly (22,24) including said magnet (54,94) from a storage orientation out of operating position permitting conveying of the wheel-and-tire assembly (12) to and from the weight application station to a use orientation in operating position adjacent the wheel-and-tire assembly (12) to which balance correcting weight (44) is to be applied, applying the balance-correcting weight (44) to the wheel-and-tire assembly (12), and conveying the wheel-and-tire assembly (12) to which a balance-correcting weight (44) has been applied away from the weight application station, said hammer assembly (22,24) including a jaw (40) having a contour (42) conforming to the shape of the clip (46) and a shank portion (50), the shank portion (50) and jaw (40) including ferromagnetic material, and an electrically conductive coil (94) surrounding the shank portion (50) of the hammer (22,24), and driving (110) the hammer (22,24) through operating cycles to hammer the weight (44) -and-clip (46) assembly onto the wheel (12).

14. A method according to claim 13 further comprising movably (84,86,88,89,100,102) mounting the hammer (22,24) relative to the coil (94) to permit driving of the hammer (22,24) through operating cycles without requiring corresponding movement of the coil (94).

15. A method according to claim 14, characterised in that the step of movably (84,86,88,89,100,102) mounting the hammer (22,24) relative to the coil (94) includes providing a passageway (89) through the coil (94), sizing the shank (50) of the hammer (22,24) for sliding insertion into the passageway (89), and retaining (52,90,98,104) the shank (50) in the passageway.

16. A method according to claim 13, characterised in that the step of providing the shank portion (50) and jaw (40) with ferromagnetic material comprises constructing a portion (54) of the jaw (40) from ferromagnetic material to contact the ferromagnetic clip (46) to manipulate the weight (44) -and-clip (46) assembly when current is passed through the coil (94) and constructing a portion (66,68) of the jaw (40) from a non-magnetic, relatively harder material than the ferromagnetic material to provide a surface (62,64) for hammering the weight (44) onto the wheel (12).

17. A method according to claim 16, characterised in that the step of constructing a portion (54) of the hammer (50) from ferromagnetic material includes constructing the portion (54) of the jaw (40) of the hammer (50) from mild steel and constructing a portion (66,68) of the jaw (40) from a non-magnetic, relatively harder material comprises constructing a portion (66,68) of the jaw (40) from stainless steel.

18. A method according to claim 16, characterised in that the step constructing a portion (54) of the jaw (40) from ferromagnetic material comprises constructing a central spine (54) of the jaw (40) which extends generally transversely to the shank (50) portion and generally transversely to the radius of a wheel-and-tire assembly (12) at the point at which the balance correcting weight (44) is to be applied from ferromagnetic material, and constructing a portion (66,68) of the jaw (40) from a non-magnetic, relatively harder material comprises constructing first (66) and second (68) hammering surface-providing portions from a non-magnetic, relatively harder material, and locating one (66) of the hammering surface-providing portions (66,68) on one side of the spine (54) and the other (68) of the hammering surface-providing portions (66,68) on the other side of the spine (54).

19. A method according to claim 18, characterised in that the step of constructing the spine (54) from ferromagnetic material comprises constructing the spine (54) from mild steel and constructing the hammering surface providing portions (66,68) from a non-magnetic, relatively harder material comprises construction the hammering surface-providing portions (66,68) from stainless steel.

## Patentansprüche

1. Gerät zum automatischen Anbringen einer Auswucht-Gewichts(44)- und Federbügel(46)-Baueinheit an einer Rad- und Reifen-Baueinheit (12) für Fahrzeuge, wobei die Gewichts(44)- und Federbügel(46)-Baueinheit einen ferromagnetischen Federbügel (46) für die Anbringung des Gewichts (44) an einem Flansch der Rad- und Reifen-Baueinheit (12) für Fahrzeuge enthält, wobei das Gerät versehen ist mit einer Einrichtung (20) zum Ausrichten der Gewichts(44)- und Federbügel(46)-Baueinheit für die Anbringung durch Anordnen eines Magneten (54, 94) an der Gewichts(44)- und Federbügel(46)-Baueinheit in großer Nähe zum Federbügel (46), einer Einrichtung (26, 28) zum Befördern des Magneten (54, 94) in große Nähe zur Rad- und Reifen-Baueinheit (12) für Fahrzeuge, einer Einrichtung (20) für die relative Ausrichtung der Rad- und Reifen-Baueinheit (12) für Fahrzeuge und dem Magneten (54, 94), so daß die vom Magneten (54, 94) getragene Gewichts(44)- und Federbügel(46)-Baueinheit geeignet ausgerichtet (42) wird, um an der Rad- und Reifen-Baueinheit (12) für Fahrzeuge angebracht zu werden, um eine in der Rad- und Reifen-Baueinheit (12) für Fahrzeuge vorhandene Unwucht zu korrigieren, und einer Einrichtung (110), um die Gewichts(44)- und Federbügel(46)-Baueinheit an der Rad- und Reifen-Baueinheit (12) für Fahrzeuge zwangsläufig anzubringen, wobei die Einrichtung (110) zum zwangsläufigen Anbringen eine Einrichtung umfaßt, um den Magneten (54, 94) selbst relativ zum Flansch der Rad- und Reifen-Baueinheit (12) für Fahrzeuge schnell hin und her zu bewegen, an welcher die Gewichts(44)- und Federbügel (46)-Baueinheit angebracht werden soll, um den Federbügel (46) auf den Flansch zu hämmern, dadurch gekennzeichnet, daß der Magnet (54) versehen ist mit einem Elektromagneten (54, 94), der eine elektromagnetische Spule (94) und einen ferromagnetischen Bereich (54) enthält, wobei das Gerät ferner versehen ist mit einer Einrichtung zum Ausrichten des Elektromagneten (54, 94) auf den ferromagnetischen Bereich (54) des Elektromagneten (54, 94) in der Nähe der anzubringenden Gewichts(44)- und Federbügel(46)-Baueinheit, einer Einrichtung zum Schicken eines elektrischen Stroms durch die elektromagnetische Spule (94), um den ferromagnetischen Federbügel (46) der Gewichts(44)- und Federbügel(46)-Baueinheit in große Nähe zum ferromagentischen Bereich (54) des Elektromagneten (54, 94) zu ziehen, und einer Einrichtung zum Unterbrechen des Stroms durch die elektromagnetische Spule (94).

2. Das Gerät gemäß Anspruch 1, dadurch gekennzeichnet, daß die Einrichtung für die relative Ausrichtung der Rad- und Reifen-Baueinheit (12) für Fahrzeuge und des Magneten (54, 94), derart, daß die vom Magneten (54, 94) getragene Gewichts(44)- und Federbügel(46)-Baueinheit passend ausgerichtet ist, um an dem Flansch der Rad- und Reifen-Baueinheit (12) für Fahrzeuge angebracht zu werden, um eine im Flansch der Rad- und Reifen-Baueinheit (12) für Fahrzeuge vorhandene Unwucht zu korrigieren, versehen ist mit einer Einrichtung (20) zum Drehen der Position am Flansch der Rad- und Reifen-Baueinheit (12) für Fahrzeuge, an der das Auswucht-Gewicht (44) angebracht werden soll, in eine bekannte Orientierung, und einer Einrichtung (26, 28) zum Bringen des Magneten (54, 94) in eine eng beabstandete Beziehung in der Umgebung des Flansches der Rad- und Reifen-Baueinheit (12) für Fahrzeuge, an der das Auswucht-Gewicht (44) angebracht werden soll.

3. Gerät gemäß Anspruch 1 oder 2, dadurch gekennzeichnet, daß der Magnet (54, 94) einen Teil eines Hammers (22, 24) bildet, wobei diese Hammerbaueinheit eine Backe (40) mit einem mit der Form des Federbügels (46) übereinstimmenden Profil (42) sowie einen Schaftbereich (50) enthält, wobei der Schaftbereich (50) und die Backe (40) ein ferromagnetisches Material, eine den Schaftbereich (50) des Hammers (22, 24) umgebende elektrisch leitende Spule (94) und eine Einrichtung (110) zum Antreiben des Hammers in Arbeitszyklen enthält, um die Gewichts- und Federbügel-Baueinheit auf das Rad zu hämmern.

4. Gerät gemäß Anspruch 3, das ferner Einrichtungen (84, 86, 88, 89, 100, 102) aufweist, um den Hammer (22, 24) relativ zur Spule (94) beweglich anzubringen, um ein Antreiben des Hammers (22, 24) in Arbeitszyklen zu ermöglichen, ohne daß eine entsprechende Bewegung der Spule (94) erforderlich ist.

5. Gerät gemäß Anspruch 4, dadurch gekennzeichnet, daß die Einrichtungen (84, 86, 88, 89, 100, 102) für die relativ zur Spule (94) bewegliche Anbringung des Hammers (22, 24) versehen sind mit einer Einrichtung (86, 89), die einen Durchgang (89) durch die Spule (94) schaffen, wobei der Schaft (50) des Hammers (22, 24) so bemessen ist, daß er in den Durchgang (89) gleitend eingeschoben werden kann, Einrichtungen (52, 90, 98, 104) zum Halten des Schafts (50) im Durchgang (89) und einer Einrichtung (96) zum Anbringen der Spule (94) an der Maschine.

6. Gerät gemäß Anspruch 3, 4 oder 4, dadurch gekennzeichnet, daß die Backe (40) des Hammers (22, 24) einen Bereich (54), der aus einem ferromagnetischen Material aufgebaut ist, das mit dem ferromagnetischen Federbügel (46) in Kontakt gelangt, um die Gewichts(44)- und Federbügel(46)-Baueinheit zu handhaben, wenn durch die Spule ()4) ein Strom geschickt wird, sowie einen Bereich (66, 68) enthält, der aus einem nichtmagnetischen, relativ härteren Material als das ferromagnetische Material aufgebaut ist, um eine Oberfläche (62, 64) zum Hämmern des Gewichts (44) an das Rad zu schaffen.

7. Gerät gemäß Anspruch 6, dadurch gekennzeichnet, daß der Bereich (54) des Hammers (50), der aus ferromagnetischem Material aufgebaut ist, aus Weichstahl aufgebaut ist und das nichtmagnetische, relativ härtere Material (66, 68) rostfreien Stahl enthält.

8. Gerät gemäß Anspruch 6, dadurch gekennzeichnet, daß der Bereich (54) der Backe (40), der aus ferromagnetischem Material aufgebaut ist, einen mittigen Stachel (54) umfaßt, der sich im allgemeinen quer zum Schaftbereich (50) und an dem Punkt, an dem das Auswucht-Gewicht (44) angebracht werden soll, im allgemeinen quer zum Radius der Rad- und Reifen-Baueinheit (12) erstreckt, und der Bereich (66, 68) der Backe, der aus einem nichtmagnetischen, relativ härteren Material aufgebaut ist, einen ersten (66) und einen zweiten (68) Hammerflächenbereich aufweist, wovon sich einer (66) auf einer Seite des Stachels (54) und der andere (68) auf der anderen Seite des Stachels (54) befinden.

9. Gerät gemäß Anspruch 8, dadurch gekennzeichnet, daß der Stachel (54) aus Weichstahl aufgebaut ist und die Hammerflächenbereiche (66, 68) aus rostfreiem Stahl aufgebaut sind.

10. Eine Maschine zum automatischen Anbringen einer Auswucht-Gewichts(44)- und Federbügel(46)-Baueinheit an einer Rad- und Reifen-Baueinheit (12) für Fahrzeuge, wobei die Gewichts(44)- und Federbügel(46)-Baueinheit einen ferromagnetischen Federbügel (46) enthält, an dem ein Auswucht-Gewicht (44) befestigt ist, wobei die Maschine einen Förderbereich (20) zum Befördern der Rad- und Reifen-Baueinheit (12) für Fahrzeuge, an der das Auswucht-Gewicht (44) angebracht werden soll, an eine Gewichtsanbringungsstation, die die Rad- und Reifen-Baueinheit (12) geeignet ausrichtet, um an der richtigen Position das Auswucht-Gewicht (44) aufzunehmen, und die die Rad- und Reifen-Baueinheit (12), an der das Auswucht-Gewicht (44) angebracht worden ist, von der Gewichtsanbringungsstation wegbefördert, wobei die Maschine ferner ein Gerät gemäß einem der vorangehenden Ansprüche enthält, in der das Gerät eine Lagerungsorientierung außerhalb der Betriebsposition, die die Beförderung der Rad- und Reifen-Baueinheit (12) an die Gewichtsanbringungsstation und von derselben gestattet, sowie eine Gebrauchsorientierung in der Betriebsposition in der Nähe der Rad- und Reifen-Baueinheit (12), an der das Auswucht-Gewicht (44) angebracht werden soll, sowie Einrichtungen (26, 28) besitzt, um das Gerät wahlweise zwischen seinen Lagerungs- und Gebrauchsorientierungen zu bewegen, um die Beförderung der Rad- und Reifen-Baueinheit (12) zur Gewichtsanbringungsstation, die Anbringung des Auswucht-Gewichts (44) an der Rad- und Reifen-Baueinheit (12) und die Wegbeförderung der Rad- und Reifen-Baueinheit (12), an der das Auswucht-Gewicht (44) befestigt worden ist, von der Gewichtsanbringungsstation zu gestatten.

11. Ein Verfahren zum automatischen Anbringen einer Auswucht-Gewichts(44)- und Federbügel(46)-Baueinheit an einer Rad- und Reifen-Baueinheit (12) für Fahrzeuge, wobei die Gewichts(44)- und Federbügel(46)-Baueinheit einen ferromagnetischen Federbügel enthält, um das Gewicht (44) an einem Flansch der Rad- und Reifen-Baueinheit (12) für Fahrzeuge anzubringen, wobei das Verfahren die Ausrichtung der Gewichts(44)- und Federbügel(46)-Baueinheit für die Anbringung durch Anordnen eines Magneten (54, 94) an der Gewichts(44)- und Federbügel(46)-Baueinheit in großer Nähe zum Federbügel (46), die Beförderung des Magneten (54, 94) in große Nähe zur Rad- und Reifen-Baueinheit (12) für Fahrzeuge und zum Magneten (54, 94), so daß die vom Magneten (54, 94) getragene Gewichts(44)- und Federbügel(46)-Baueinheit geeignet orientiert wird, um an der Rad- und Reifen-Baueinheit für Fahrzeuge (12) angebracht zu werden, um eine in der Rad- und Reifen-Baueinheit (12) für Fahrzeuge vorhandene Unwucht zu korrigieren, sowie das zwangsläufige Bewegen der Gewichts(44)- und Federbügel(46)-Baueinheit in einen Eingriff mit der Rad- und Reifen-Baueinheit (12) umfaßt, wobei die Gewichts(44)- und Federbügel(46)-Baueinheit durch schnelles Hin- und Herbewegen des Magneten (54, 94) relativ zum Flansch der Rad- und Reifen-Baueinheit (12) für Fahrzeuge, an der die Gewichts(44)- und Federbügel(46)-Baueinheit angebracht werden soll, zwangsläufig bewegt wird, um den Federbügel (46) auf den Flansch zu hämmern, dadurch gekennzeichnet, daß der Schritt des Anordnens eines Magneten (54, 94) an der Gewichts(44)- und Federbügel(46)-Baueinheit in großer Nähe zum Federbügel (46) die Anordnung eines Elektromagneten (54, 94), der eine elektromagnetische Spule (94) und einen ferromagnetischen Bereich (54) an der Gewichts(44)- und Federbügel(46)-Baueinheit in der Nähe des Federbügels (46) enthält, die Ausrichtung des Elektromagneten (54, 94) auf den ferromagnetischen Bereich (54) des Elektromagneten (54, 94) in der Nähe der anzubringenden Gewichts(44)- und Federbügel(46)-Baueinheit, sowie das Schicken eines elektrischen Stroms durch die elektromagnetische Spule (94), um den ferromagnetischen Federbügel (46) der Gewichts(44)- und Federbügel(46)-Baueinheit in große Nähe zum ferromagnetischen Bereich (54) des Elektromagneten (54, 94) zu ziehen, umfaßt, wobei das Verfahren ferner die Unterbrechung des Stroms durch die elektromagnetische Spule (94) umfaßt.

12. Ein Verfahren gemäß Anspruch 11, dadurch gekennzeichnet, daß der Schritt der relativen Ausrichtung der Rad- und Reifen-Baueinheit (12) für Fahrzeuge und des Magneten (54, 94), derart, daß die vom Magneten (54, 94) getragene Gewichts(44)- und Federbügel(46)-Baueinheit geeignet ausgerichtet wird, um am Flansch der Rad- und Reifen-Baueinheit (12) für Fahrzeuge angebracht zu werden, um eine im Flansch der Rad- und Reifen-Baueinheit (12) für Fahrzeuge vorhandene Unwucht zu korrigieren, die Drehung der Position am Flansch der Rad- und Reifen-Baueinheit (12) für Fahrzeuge, an der das Auswucht-Gewicht (44) angebracht werden soll, in eine bekannte Orientierung sowie das Bringen des Magneten (54, 94) in eine eng beabstandete Beziehung in der Nähe des Flansches der Rad- und Reifen-Baueinheit (12) für Fahrzeuge, an der das Auswucht-Gewicht (44) angebracht werden soll, umfaßt.

13. Ein Verfahren gemäß einem der Ansprüche 11 oder 12, das ferner die Beförderung der Rad- und Reifen-Baueinheit (12), an der das Auswucht-Gewicht (44) angebracht werden soll, an eine Gewichtsanbringungsstation, die geeignete Orientierung der Rad- und Reifen-Baueinheit (12), so daß sie an der richtigen Position das Auswucht-Gewicht (44) aufnimmt, das Bewegen (26, 28) einer Hammer-Baueinheit (22, 24), die den Magneten (54, 94) enthält, aus einer Lagerungsorientierung außerhalb der Betriebsposition, in der die Beförderung der Rad- und Reifen-Baueinheit (12) an die Gewichtsanbringungsstation und von derselben möglich ist, in eine Gebrauchsorientierung in der Betriebsposition in der Nähe der Rad- und Reifen-Baueinheit (12), an der das Auswucht-Gewicht (44) angebracht werden soll, die Anbringung des Auswucht-Gewichts (44) an der Rad- und Reifen-Baueinheit (12) und die Wegbeförderung der Rad- und Reifen-Baueinheit (12), an der das Auswucht-Gewicht (44) angebracht worden ist, von der Gewichtsanbringungsstation, wobei die Hammer-Baueinheit (22, 24) eine Backe (40) mit einem mit der Form des Federbügels (46) übereinstimmenden Profil (42) sowie einen Schaftbereich (50) enthält, wobei der Schaftbereich (50) und die Backe (40) ein ferromagnetisches Material und eine den Schaftbereich (50) des Hammers (22, 24) umgebende elektrisch leitende Spule (94) enthalten, und das Antreiben (110) des Hammers (22, 24) in Arbeitszyklen, um die Gewichts(44)- und Federbügel(46)-Baueinheit an das Rad (12) zu hämmern, umfaßt.

14. Ein Verfahren gemäß Anspruch 13, das ferner die bewegliche (84, 86, 88, 89, 100, 102) Anbringung des Hammers (22, 24) relativ zur Spule (94) umfaßt, um ein Antreiben des Hammers (22, 24) in Arbeitszyklen zu gestatten, ohne daß eine entsprechende Bewegung der Spule (94) erforderlich ist.

15. Ein Verfahren gemäß Anspruch 14, dadurch gekennzeichnet, daß der Schritt der beweglichen (84, 86, 88, 89, 100, 102) Anbringung des Hammers (22, 24) relativ zur Spule (94) die Schaffung eines Durchgangs (89) durch die Spule (94), die Bemessung des Schafts (50) des Hammers (22, 24), derart, daß ein gleitendes Einschieben in den Durchgang (89) möglich ist, und das Halten (52, 90, 98, 104) des Schafts (50) im Durchgang umfaßt.

16. Ein Verfahren gemäß Anspruch 13, dadurch gekennzeichnet, daß der Schritt des Versehens des Schaftbereichs (50) und der Backe (40) mit ferromagnetischem Material den Aufbau eines Bereichs (54) der Backe (40) aus ferromagnetischem Material, das mit dem ferromagnetischen Federbügel (46) in Kontakt gelangt, um die Gewichts(44)- und Federbügel(46)-Baueinheit zu handhaben, wenn durch die Spule (94) Strom geschickt wird, und den Aufbau eines Bereichs (66, 68) der Backe (40) aus einem nichtmagnetischen, relativ härteren Material als das ferromagnetische Material für die Schaffung einer Oberfläche (62, 64) zum Hämmern des Gewichts (44) an das Rad (12) umfaßt.

17. Ein Verfahren gemäß Anspruch 16, dadurch gekennzeichnet, daß der Schritt des Aufbauens eines Bereichs (54) des Hammers (50) aus ferromagnetischem Material das Aufbauen des Bereichs (54) der Backe (40) des Hammers (50) aus Weichstahl enthält und das Aufbauen eines Bereichs (66, 68) der Backe (40) aus einem nichtmagnetischen, relativ härteren Material das Aufbauen eines Bereichs (66, 68) der Backe (40) aus rostfreiem Stahl enthält.

18. Ein Verfahren gemäß Anspruch 16, dadurch gekennzeichnet, daß der Schritt des Aufbauens eines Bereichs (54) der Backe (40) aus ferromagnetischem Material das Aufbauen eines mittigen Stachels (54) der Backe (40), der sich im allgemeinen quer zum Schaftbereich (50) und in dem Punkt, in dem das Auswucht-Gewicht (44) angebracht werden soll, im allgemeinen quer zum Radius der Rad- und Reifen-Baueinheit (12) erstreckt, aus ferromagnetischem Material umfaßt und der Schritt des Aufbauens eines Bereiches (66, 68) der Backe (40) aus einem nichtmagnetischen, relativ härteren Material das Aufbauen eines ersten (66) und eines zweiten (68) Hammerflächenbereichs aus nichtmagnetischem, relativ härteren Material und das Anordnen eines (66) der Hammerflächenbereiche (66, 68) auf einer Seite des Stachels (44) und des anderen (68) der Hammerflächenbereiche (66, 68) auf der anderen Seite des Stachels (54) umfaßt.

19. Ein Verfahren gemäß Anspruch 18, dadurch gekennzeichnet, daß der Schritt des Aufbauens des Stachels (54) aus ferromagnetischem Material das Aufbauen des Stachels (54) aus Weichstahl umfaßt und der Schritt des Aufbauens der Hammerflächenbereiche (66, 68) aus einem nichtmagnetischen, relativ härteren Material das Aufbauen der Hammerflächenbereiche (66, 68) aus rostfreiem Stahl umfaßt.

## Revendications

1. Appareil d'application automatique d'un ensemble de poids (44) et pince (46) de correction d'équilibre sur un ensemble (12) de roue et pneumatique de véhicule, l'ensemble de poids (44) et pince (46) incluant une pince ferromagnétique (46) pour monter le poids (44) sur une joue de l'ensemble (12) de roue et pneumatique de véhicule, l'appareil comprenant un moyen (20) d'orientation de l'ensemble de poids (44) et pince (46) en vue de son application en plaçant un aimant (54, 94) sur l'ensemble de poids (44) et pince (46) à proximité étroite de la pince (46), un moyen (26, 28) de transport de l'aimant (54, 94) à proximité étroite de l'ensemble (12) de roue et pneumatique de véhicule, un moyen (20) d'orientation relative de l'ensemble (12) de roue et pneumatique de véhicule et de l'aimant (54, 94) d'une manière telle que l'ensemble de poids (44) et pince (46) porté par l'aimant (54, 94) est aligné de façon appropriée (42) pour être appliqué sur l'ensemble (12) de roue et pneumatique du véhicule afin de corriger le déséquilibre existant dans l'ensemble (12) de roue et pneumatique de véhicule, et un moyen (110) de sollicitation de l'ensemble de poids (44) et pince (46) sur l'ensemble (12) de roue et pneumatique, dans lequel ledit moyen de sollicitation (110) comprend un moyen de déplacement rapide en va-et-vient de l'aimant (54, 94) lui-même par rapport à la joue de l'ensemble (12) de roue et pneumatique de véhicule auquel l'ensemble de poids (44) et pince (46) doit être appliqué pour marteler la pince (46) sur la joue, caractérisé en ce que l'aimant (54) comprend un électroaimant (54, 94) incluant une bobine (94) électromagnétique, et une partie ferromagnétique (54), un moyen d'orientation de l'électroaimant (54, 94) de manière que la partie ferromagnétique (54) de l'électroaimant (54, 94) soit adjacente à l'ensemble de poids (44) et pince (46) à appliquer, un moyen servant à faire passer un courant électrique à travers la bobine électromagnétique (94) afin d'attirer la pince ferromagnétique (46) de l'ensemble de poids (44) et pince (46) à proximité étroite de la partie ferromagnétique (54) de l'électroaimant (54, 94) et l'appareil comprend de plus un moyen d'interruption du courant traversant la bobine électromagnétique (94).

2. Appareil selon la revendication 1, caractérisé en ce que le moyen d'orientation relative de l'ensemble (12) de roue et pneumatique de véhicule et de l'aimant (54, 94) d'une manière telle que l'ensemble de poids (44) et pince (46) porté par l'aimant (54, 94) soit aligné de façon appropriée pour être appliqué sur la joue de l'ensemble (12) de roue et pneumatique de véhicule afin de corriger le déséquilibre existant dans l'ensemble (12) de roue et pneumatique de véhicule comprend un moyen (20) de mise en rotation de l'emplacement, sur la joue de l'ensemble (12) de roue et pneumatique de véhicule, auquel le poids (44) de correction d'équilibre doit être appliqué selon une orientation connue, et un moyen (26, 28) d'amenée de l'aimant (54, 94) dans une relation d'espacement étroit près de la joue de l'ensemble (12) de roue et pneumatique de véhicule auquel doit être appliqué le poids (44) de correction d'équilibre.

3. Appareil selon la revendication 1 ou 2, caractérisé en ce que ledit aimant (54, 94) fait partie d'un marteau (22, 24), ledit ensemble marteau incluant une mâchoire (40) pourvue d'un contour (42) se conformant à la configuration de la pince (46) et d'une partie de tige (50), la partie de tige (50) et la mâchoire (40) comprenant une matière ferromagnétique, une bobine électriquement conductrice (94) entourant la partie de tige (50) du marteau (22, 24), et un moyen (110) d'entraînement du marteau au cours de cycles de fonctionnement afin de marteler sur la roue l'ensemble de poids et pince.

4. Appareil selon la revendication 3 comprenant en outre un moyen (84, 86, 88, 89, 100, 102) de montage amovible du marteau (22, 24) par rapport à la bobine (94) afin de permettre d'entraîner le marteau (22, 24) dans des cycles de fonctionnement sans exiger un déplacement correspondant de la bobine (94).

5. Appareil selon la revendication 4, caractérisé en ce que le moyen (84, 86, 88, 89, 100, 102) de montage amovible du marteau (22, 24) par rapport à la bobine (94) inclut un moyen (86, 89) ménageant un passage (89) à travers la bobine (94) pour la tige (50) du marteau (22, 24) dimensionnée pour pouvoir être insérée à coulissement dans le passage (89), un moyen (52, 90, 98, 104) pour retenir la tige (50) dans le passage (89), et un moyen (96) de montage de la bobine (94) sur la machine.

6. Appareil selon la revendication 3, 4 ou 5, caractérisé en ce que la mâchoire (40) du marteau (22, 24) inclut une partie (54) en matière ferromagnétique, prévue pour venir en contact avec la pince ferromagnétique (46) afin de manipuler l'ensemble de poids (44) et pince (46) lorsqu'un courant est envoyé à travers la bobine (94), et une partie (66, 68) en matière non magnétique relativement plus dure que la matière ferromagnétique afin de constituer une surface (62, 64) de martelage du poids (84) sur la roue.

7. Appareil selon la revendication 6, caractérisé en ce que la partie (54) du marteau (50) qui est en une matière ferromagnétique est réalisée en acier doux et la matière non magnétique relativement plus dure (66, 68) est en acier inoxydable.

8. Appareil selon la revendication 6, caractérisé en ce que la partie (54) de la mâchoire (40) qui est en matière ferromagnétique comprend une pointe centrale (54) qui s'étend de façon généralement transversale à la partie de tige (50) et de façon généralement transversale au rayon d'un ensemble (12) de roue et pneumatique au point où le poids (44) de correction d'équilibre doit être appliqué, et la partie (66, 68) de la mâchoire qui est en une matière non magnétique relativement plus dure comprend une première (66) et une deuxième (68) parties constituant la surface de martelage, l'une (66) des parties constituant la surface de martelage étant située sur un côté de la pointe (54) et l'autre (68) des parties constituant la surface de martelage étant située sur l'autre côté de la pointe (54).

9. Appareil selon la revendication 8, caractérisé en ce que la pointe (54) est en acier doux et les parties (66, 68) constituant la surface de martelage sont en acier inoxydable.

10. Une machine d'application automatique d'un ensemble de poids (44) et pince (46) d'équilibrage sur un ensemble (12) de roue et pneumatique de véhicule, l'ensemble de poids (44) et pince (46) incluant une pince ferromagnétique (46) à laquelle le poids (44) de correction d'équilibre est attaché, la machine incluant une partie de transporteur (20) pour transporter vers une station d'application de poids l'ensemble (12) de roue et pneumatique auquel le poids (44) de correction d'équilibre doit être appliqué, orienter de façon appropriée l'ensemble (12) de roue et pneumatique afin de recevoir à l'emplacement correct le poids (44) de correction d'équilibre, et transporter à distance de la station d'application de poids l'ensemble (12) de roue et pneumatique auquel le poids (44) de correction d'équilibre a été appliqué, la machine incluant en outre un appareil selon une revendication précédente quelconque, dans laquelle ledit appareil comprend une orientation de stockage, en dehors d'une position de fonctionnement, permettant de transporter l'ensemble (12) de roue et pneumatique vers la station d'application de poids et à partir de celle-ci, et, en position de fonctionnement, une orientation d'utilisation adjacente à l'ensemble (12) de roue et pneumatique auquel le poids (44) de correction d'équilibre doit être appliqué, et un moyen (26, 28) de déplacement sélectif de l'appareil entre ses orientations de stockage et d'utilisation afin de permettre de transporter l'ensemble (12) de roue et pneumatique vers la station d'application de poids, d'appliquer le poids (44) de correction d'équilibre à l'ensemble (12) de roue et pneumatique et de transporter à distance de la station d'application de poids l'ensemble (12) de roue et pneumatique auquel le poids (44) de correction d'équilibre a été appliqué.

11. Un procédé d'application automatique d'un ensemble de poids (44) et pince (46) de correction d'équilibre à un ensemble (12) de roue et pneumatique de véhicule, l'ensemble de poids (44) et pince (46) incluant une pince ferromagnétique pour monter le poids (44) sur une joue de l'ensemble (12) de roue et pneumatique de véhicule, le procédé comprenant les étapes consistant à: orienter pour son application l'ensemble de poids (44) et pince (46) en plaçant un aimant (54, 94) sur l'ensemble de poids (44) et pince (46) à proximité étroite de la pince (46), transporter l'aimant (54, 94) à proximité étroite de l'ensemble (12) de roue et pneumatique de véhicule et de l'aimant (54, 94) de façon que l'ensemble de poids (44) et pince (46) porté par l'aimant (54, 94) soit orienté de façon appropriée pour être appliqué sur l'ensemble (12) de roue et pneumatique de véhicule afin de corriger le déséquilibre existant dans l'ensemble (12) de roue et pneumatique de véhicule, et solliciter l'ensemble de poids (44) et pince (46) en contact avec l'ensemble (12) de roue et pneumatique, l'ensemble de poids (44) et pince (46) étant sollicité en déplaçant rapidement en va-et-vient l'aimant (54, 94) par rapport à la joue de l'ensemble (12) de roue et pneumatique de véhicule auquel l'ensemble de poids (44) et pince (46) doit être appliqué, afin de marteler la pince (46) sur la joue, caractérisé en ce que l'étape consistant à placer un aimant (54, 94) sur l'ensemble de poids (44) et pince (46) à proximité étroite de la pince (46) comprend les étapes consistant à placer un électroaimant (54, 94) incluant une bobine électromagnétique (94) et une partie ferromagnétique (54) sur l'ensemble de poids (44) et pince (46) à proximité de la pince (46), orienter l'électroaimant (54, 94) de manière que la partie ferromagnétique (54) de l'électroaimant (54, 94) soit adjacente à l'ensemble de poids (44) et pince (46) à appliquer, et faire passer un courant électrique à travers la bobine électromagnétique (94) afin d'attirer la pince ferromagnétique (46) de l'ensemble de poids (44) et pince (46) à proximité étroite de la partie ferromagnétique (54) de l'électroaimant (54, 94) et le procédé comprend également le fait d'interrompre le courant traversant la bobine électromagnétique (94).

12. Un procédé selon la revendication 11, caractérisé en ce que l'étape consistant à orienter relativement l'ensemble (12) de roue et pneumatique de véhicule et l'aimant (54, 94) d'une manière telle que l'ensemble de poids (44) et pince (46) porté par l'aimant (54, 94) soit orienté de façon appropriée pour être appliqué sur la joue de l'ensemble (12) de roue et pneumatique de véhicule afin de corriger le déséquilibre existant dans la joue de l'ensemble (12) de roue et pneumatique de véhicule comprend une mise en rotation, vers une orientation connue, de l'emplacement situé sur la joue de l'ensemble (12) de roue et pneumatique de véhicule auquel le poids (44) de correction de l'équilibre doit être appliqué, et appliquer l'aimant (54, 94) selon une relation étroitement espacée adjacente à la joue de l'ensemble (12) de roue et pneumatique de véhicule auquel doit être appliqué le poids (44) de correction d'équilibre.

13. Un procédé selon l'une quelconque des revendications 11 ou 12, et incluant en outre les étapes consistant à transporter vers une station d'application de poids l'ensemble (12) de roue et pneumatique auquel doit être appliqué le poids (44) de correction d'équilibre, orienter l'ensemble (12) de roue et pneumatique pour qu'il reçoive à l'emplacement correct le poids (44) de correction d'équilibre, déplacer (26, 28) un ensemble (22, 24) de marteau comprenant ledit aimant (54, 94) depuis une orientation de stockage située en dehors d'une position de fonctionnement qui permet le transport de l'ensemble (12) de roue et pneumatique vers la station d'application et à partir celle-ci vers une orientation d'utilisation dans une position de fonctionnement adjacente à l'ensemble (12) de roue et pneumatique auquel le poids (44) de correction d'équilibre doit être appliqué, appliquer le poids (44) de correction d'équilibre à l'ensemble (12) de roue et pneumatique, et transporter à distance de la station d'application l'ensemble (12) de roue et pneumatique auquel un poids de correction d'équilibre a été appliqué, ledit ensemble de marteau (22, 24) incluant une mâchoire (40) pourvue d'un contour (42) qui est conformé à la configuration de la pince (46) et d'une partie de tige (50), la partie de tige (50) et la mâchoire (40) incluant une matière ferromagnétique, et une bobine électriquement conductrice (54) entourant la partie de tige (50) du marteau (22, 24), et entraîner (110) le marteau (22, 24) pendant des cycles d'opération afin de marteler sur la roue (12) l'ensemble de poids (44) et pince (46).

14. Un procédé selon la revendication 13, comprenant en outre un montage amovible (84, 86, 88, 89, 100, 102) du marteau (22, 24) par rapport à la bobine (94) afin de permettre d'entraîner le marteau (22, 24) pendant des cycles de fonctionnement sans exiger un mouvement correspondant de la bobine (94).

15. Un procédé selon la revendication 14, caractérisé en ce que l'étape de montage amovible (84, 86, 88, 89, 100, 102) du marteau (22, 24) par rapport à la bobine (94) inclut l'étape consistant à ménager un passage (89) à travers la bobine (94), dimensionner la tige (50) du marteau (22, 24) pour qu'elle puisse être insérée à coulissement dans le passage (89) et retenir (52, 90, 98, 104) la tige (50) dans le passage.

16. Un procédé selon la revendication 13, caractérisé en ce que l'étape consistant à réaliser en matière ferromagnétique une partie de tige (50) et la mâchoire (40) comprend une fabrication d'une partie (54) de la mâchoire (40) en matière ferromagnétique pour qu'elle vienne en contact avec la pince ferromagnétique (46) afin de manipuler l'ensemble de poids (44) et pince (46) lorsqu'un courant est envoyé à travers la bobine (94) et une fabrication d'une partie (66, 68) de la mâchoire (40) en une matière non magnétique relativement plus dure que la matière ferromagnétique, afin de réaliser une surface (62, 64) de martelage du poids (44) sur la roue (12).

17. Un procédé selon la revendication 16, caractérisé en ce que l'étape consistant à fabriquer une partie (54) du marteau (50) en matière ferromagnétique inclut une fabrication de la partie (54) de la mâchoire (40) du marteau (50) en acier doux et une fabrication d'une partie (66, 68) de la mâchoire (40) en une matière non magnétique relativement plus dure, comprend une fabrication d'une partie (66, 68) de la mâchoire (40) en acier inoxydable.

18. Un procédé selon la revendication 16, caractérisé en ce que l'étape de fabrication d'une partie (54) de la mâchoire (40) en matière ferromagnétique comprend une fabrication en matière ferromagnétique d'une pointe centrale (54) de la mâchoire (40) qui s'étend de façon généralement transversale à la partie de tige (50) et de façon généralement transversale au rayon de l'ensemble (12) de roue et pneumatique au point auquel le poids (44) de correction d'équilibre doit être appliqué, et une fabrication d'une partie (66, 68) de la mâchoire (40) en matière non magnétique relativement plus dure comprend une fabrication en une matière non magnétique relativement plus dure d'une première (66) et d'une deuxième (68) parties constituant une surface de martelage, et un positionnement de l'une (66) des parties (66, 68) constituant la surface de martelage, sur un côté de la pointe (54) et de l'autre (68) des parties (66, 68) constituant la surface de martelage sur l'autre côté de la pointe (54).

19. Un procédé selon la revendication 18, caractérisé en ce que l'étape de fabrication de la pointe (54) en matière ferromagnétique comprend une fabrication de la pointe (54) en acier doux et une fabrication des parties (66, 68) constituant la surface de martelage en une matière non magnétique relativement plus dure comprend une fabrication des parties (66, 68) constituant la surface de martelage en acier inox.
